# EUROPÄISCHE PATENTANMELDUNG

(11) **EP 3 670 385 A1**
(43) Veröffentlichungstag der Anmeldung: **24.06.2020**
(21) Anmeldenummer: 18212974.2
(22) Anmeldetag: 17.12.2018
(51) Int. Cl.: B65D 88/36, B65D 90/42, C08J 5/04

(54) **SCHWIMMFÄHIGES FORMTEIL AUS ZUCKERRÜBENSCHNITZELN**

(71) Anmelder: Pfeifer & Langen GmbH & Co. KG, 50858 Köln (DE)
(72) Erfinder: SEEMANN, Julia, 52379 Langerwehe (DE); KOCH, Timo Johannes, 50189 Elsdorf (DE)
(74) Vertreter: Kutzenberger Wolff & Partner

(57) **Zusammenfassung**

Die Erfindung betrifft ein schwimmfähiges Formteil zur Verringerung der Verdunstung aus Flüssigkeitsreservoirs welches auf einem Naturfaserverbundwerkstoff basiert, der aus Zuckerrüben gewonnene Partikel und eine Polymermatrix enthält und durch Außenseiten gekennzeichnet ist, die derart beschaffen sind, dass sich schwimmfähige Formteile, die Rand an Rand angeordnet sind, einander symmetrisch überlappen.

## Beschreibung

Die Erfindung betrifft ein schwimmfähiges Formteil zur Verringerung der Verdunstung einer Flüssigkeit aus einem Flüssigkeitsreservoir.

Es ist allgemein bekannt, dass die Verdunstung von Flüssigkeiten, beispielsweise aus Güllebehältern oder Rohölreservoirs, ein immer größer werdendes Umweltproblem darstellt. In diesem Zusammenhang sind sowohl die Auswirkungen der Dämpfe auf die Umgebung als auch die störenden Gerüche für die sich in unmittelbarer Umgebung aufhaltenden Menschen und/oder Tiere problematisch.

Es sind verschiedene Verfahren zur Verringerung der Verdunstung von Flüssigkeiten aus Flüssigkeitsreservoirs bekannt. DE 34 18 255 offenbart ein Verfahren und ein Produkt in Form von sechseckigen schwimmenden Modulen, das mittels einiger eingebetteter Stifte aneinander befestigt werden und auf der Flüssigkeitsoberfläche angeordnet werden kann, wodurch die Flüssigkeit bedeckt und die Verdunstung der Flüssigkeit verringert wird. Diese Technologie ist allerdings mit einigen Nachteilen behaftet. Die Handhabung des Produkts ist arbeitsintensiv und zeitaufwendig, da alle sechseckigen Module über die eingebetteten Stifte miteinander verbunden werden müssen. Weiterhin erhöht das Einbetten der Befestigungsstifte in die Module die Kosten des Herstellungsprozesses.

WO 91/12186 betrifft zerlegbare, dünnwandige Formteile, die eine hohe mechanische Stabilität aufweisen.

WO 2005/058730 betrifft ein Verfahren und ein Produkt zum Abdecken von Flüssigkeitsoberflächen mit dem Zweck, die Verdampfung aus der Flüssigkeit zu reduzieren oder die Temperatur der Flüssigkeit zu stabilisieren. Die Erfindung eignet sich zum Abdecken der Flüssigkeitsoberfläche in Güllebehältern und Behältern, in denen die Flüssigkeitsverdampfung ein ständig zunehmendes Umwelt- und störendes Geruchsproblem darstellt. Das Produkt besteht aus schwimmenden Elementen, die sich über die Flüssigkeitsoberfläche ausbreiten und diese effektiv bedecken können, da die Grundform der Elemente Dreiecke, Vierecke oder Sechsecke des gleichen Winkels sind, die formähnlich sind und sich ohne Spaltluft kombinieren lassen und wahlweise mit gegenseitiger symmetrischer Überlappung zwischen den einzelnen Modulen.

LinShu et al., J. Agric. Food Chem., 2005, 53 (23), pp 9017-9022 und Chen et al., Ind. Eng. Chem. Res., 2008, 47 (22), pp 8667-8675, betreffen biologisch abbaubare Verbundstoffe aus Zuckerrübenschnitzeln und Polymilchsäure.

Liu et al., Ind. Eng. Chem. Res., 2011, 50 (24), pp 13859-13865 betrifft thermoplastische Mischungen aus Zuckerrübenpulpe und Poly(butylenadipat-co-terephthalat).

Die bekannten schwimmfähigen Formteile sind nicht in jeder Hinsicht zufriedenstellend und es besteht ein Bedarf an verbesserten schwimmfähigen Formteilen. Schwimmfähige Formteile sollten ein gutes Schwimmverhalten bei guter Witterungsbeständigkeit und mechanischer Stabilität sowie geringem Eigengewicht aufweisen. Auch im Falle kleinerer Beschädigungen sollte das Schwimmverhalten noch gewährleistet sein.

Es ist eine Aufgabe der Erfindung, schwimmfähige Formteile bereitzustellen, welche Vorteile gegenüber dem Stand der Technik aufweisen.

Diese Aufgabe wird durch den Gegenstand der Patentansprüche gelöst.

Die Erfindung betrifft ein schwimmfähiges Formteil zur Verringerung der Verdunstung einer Flüssigkeit aus einem Flüssigkeitsreservoir; wobei das Formteil einen Naturfaserverbundwerkstoff enthält, welcher aus Zuckerrüben gewonnene Partikel umfasst, die in einer Polymermatrix eingebettet sind; wobei das Formteil in einer horizontalen Schwimmebene mehreckig ist und jeweils zwischen zwei benachbarten Ecken entlang der Schwimmebene jeweils eine Stirnseite aufweist; und wobei die Stirnseiten derart beschaffen sind, dass mehrere Formteile derart benachbart angeordnet werden können, dass sich gegenüberliegende Stirnseiten benachbarter Formteile berühren, vorzugsweise im Wesentlichen vollflächig, und die mehreren Formteile einen im Wesentlichen geschlossenen Flächenverbund ausbilden.

Im Sinne der Erfindung bedeutet "im Wesentlichen" bevorzugt zu mindestens 95%, bevorzugter zu mindestens 98%, und insbesondere praktisch vollständig.

Es wurde überraschend gefunden, dass sich Zuckerrübenschnitzel in großem Maßstab in Naturfaserverbundwerkstoffen unterschiedlichster Zusammensetzung einsetzen lassen. Neben Futtermitteln und Rohstoffen für die Erzeugung von Biogas steht somit eine neue Verwendungsmöglichkeit von Zuckerrübenschnitzeln zur Verfügung, welche in großen Mengen bei der Zuckerproduktion anfallen und daher vergleichsweise kostengünstig und gleichzeitig nachhaltig sind.

Naturfaserverbundwerkstoffe sind durch ihren Gehalt an natürlichen, nachwachsenden Rohstoffen, die als Abfallprodukt bei der Verarbeitung von Zuckerrüben anfallen, besonders nachhaltig. Die Zuckerrübe ist die bedeutendste Zuckerpflanze der gemäßigten Breiten. Bei der Zuckerherstellung fallen Nebenprodukte an, die als Futtermittel oder Substrat für Fermentationen verwendet werden. Zunehmend ist die Bedeutung von Zuckerrüben als nachwachsender Rohstoff, z. B. zur Herstellung von Bioethanol und Biogas.

Die mechanischen Eigenschaften des Naturfaserverbundwerkstoffs sind mit den Eigenschaften anderer Faserverbundwerkstoffe auf Basis anderer Naturfasern durchaus vergleichbar, ggf. sogar besser. Es wurde überraschend gefunden, dass sich Zuckerrübenschnitzel mit einer Korngröße im Bereich von 112 bis 800 µm besonders gut zu Naturfaserverbundwerkstoffen verarbeiten lassen. Liegt die Korngröße darunter, so wird die mittlere Faserlänge reduziert; liegt die Korngröße darüber, so lassen sich die Zuckerrübenschnitzel nicht mehr so gut in eine Polymermatrix einarbeiten und verpressen. Erfindungsgemäß sind alle Kerngrößen möglich, Korngrößen im Bereich von 112 bis 800 µm sind jedoch bevorzugt.

Ferner wurde überraschend gefunden, dass die Naturfasern aus Zuckerrübenschnitzeln mit einer Vielzahl von Polymeren und Polymermischungen kompatibel sind, so dass sie sich gut in Polymermatrices daraus einbetten lassen, wodurch hervorragende Eigenschaften erreicht werden können. Dabei können die Polymere thermoplastisch oder duroplastisch sein.

Außerdem wurde überraschend gefunden, dass die erfindungsgemäßen Naturfaserverbundwerkstoffe ggf. auch bei der Verarbeitung kurzfristig hohen Temperaturen ausgesetzt werden können, wie sie beispielsweise beim Spritzgießen auftreten. Dies ist insofern überraschend, als dass Zuckerrübenschnitzel ggf. einen hohen Gehalt an Pektin aufweisen können, welches üblicherweise temperaturempfindlich ist.

Ferner wurde überraschend gefunden, dass die Naturfaserverbundwerkstoffe ein vorteilhaftes Aussehen haben. So verleihen die Zuckerrübenschnitzel den Naturfaserverbundwerkstoffen einen attraktiven Glanz. Weiterhin konnte eine ansprechende Maserung bei nicht eingefärbten Naturfaserverbundwerkstoffe beobachtet werden.

Naturfaserverbundwerkstoffe zeichnen sich u.a. durch eine geringe Dichte bei gleichzeitig hoher Festigkeit und Steifigkeit aus. Es hat sich als vorteilhaft erwiesen, dass das schwimmfähige Formteil im Vergleich zum Stand der Technik eine höhere mechanische Belastbarkeit bei geringerer Materialdichte aufweist.

Wenn das resultierende spezifische Gewicht des schwimmfähigen Formteils niedriger ist als das spezifische Gewicht der Flüssigkeit, in der es verwendet werden soll, ist zudem sichergestellt, dass das Produkt auch dann schwimmt, wenn es physisch beschädigt ist.

Eine höhere mechanische Belastbarkeit erlaubt außerdem einen geringeren Materialeinsatz und damit einhergehende Gewichtsreduktion bei gleichbleibender mechanischer Stabilität. Dies wirkt sich vorteilhaft auf die praktische Handhabung und die Transportkosten aus.

Die im Vergleich zu ähnlichen (aus dem Stand der Technik bekannten) Systemen bevorzugt geringere Dichte der erfindungsgemäßen schwimmfähigen Formteile wirkt sich positiv auf die Schwimmfähigkeit aus und erlaubt besonders bevorzugt den Verzicht auf ein zusätzliches Auftriebselement, wie beispielsweise eine Auftriebskugel. Solche zusätzlichen Auftriebselemente sind allerdings erfindungsgemäß umfasst. In einer bevorzugten Ausführungsform weist das erfindungsgemäße Formteil ein oder mehrere solcher Auftriebselemente auf, in einer anderen bevorzugten Ausführungsform weist das erfindungsgemäße Formteil keine Auftriebselemente auf.

Die erfindungsgemäßen schwimmfähigen Formteile weisen vorzugsweise im Vergleich zum Stand der Technik einen geringeren Wärmeleitkoeffizienten auf und sind daher bei Anwendungen, welche auf eine thermische Isolierung abzielen, vorteilhaft gegenüber vergleichbaren Formteilen aus dem Stand der Technik.

Die erfindungsgemäßen schwimmfähigen Formteile zeichnen sich im Vergleich zum Stand der Technik bevorzugt durch eine hervorragende Witterungsbeständigkeit aus, typischerweise sowohl gegenüber UV Strahlung, Wärme und Kälte, Süßwasser und Salzwasser.

### Formteil allgemein

Ein erster Aspekt der Erfindung betrifft ein schwimmfähiges Formteil zur Verringerung der Verdunstung einer Flüssigkeit aus einem Flüssigkeitsreservoir; wobei das Formteil einen Naturfaserverbundwerkstoff enthält, welcher aus Zuckerrüben gewonnene Partikel umfasst, die in einer Polymermatrix eingebettet sind; wobei das Formteil in einer horizontalen Schwimmebene mehreckig ist und jeweils zwischen zwei benachbarten Ecken entlang der Schwimmebene jeweils eine Stirnseite aufweist; und wobei die Stirnseiten derart beschaffen sind, dass mehrere Formteile derart benachbart angeordnet werden können, dass sich gegenüberliegende Stirnseiten benachbarter Formteile berühren, vorzugsweise im Wesentlichen vollflächig, und die mehreren Formteile einen im Wesentlichen geschlossenen Flächenverbund ausbilden.

### Definition der Schlüsselbegriffe in Anspruch 1

Das erfindungsgemäße Formteil eignet sich zur Verringerung der Verdunstung einer Flüssigkeit aus einem Flüssigkeitsreservoir. Ein Flüssigkeitsreservoir im Sinne der Erfindung ist ein ortsfestes, baulich begrenztes Volumen oder Behältnis welches zur Aufbewahrung von Flüssigkeiten dient. Beispiele für Flüssigkeitsreservoirs im Sinne der Erfindung sind natürliche und/oder künstliche stehende und/oder fließende Gewässer, Öltanks, Düngemittelbehälter, Tiertränken, Teiche, Tümpel, Silos, Gewässer im Bereich von Flughäfen, Aquakulturen in Fischzuchtanlagen, Hafenbecken oder Schwimmbecken. Beispiele für Flüssigkeiten im Sinne der Erfindung sind Süßwasser, Salzwasser, Rohöl, Petroleum, Benzin, organische Lösemittel, flüssiger Stalldünger, Abwasser oder korrosive Flüssigkeiten.

Die Verdunstung einer Flüssigkeit im Sinne der Erfindung bedeutet der Übergang einer Flüssigkeit vom flüssigen in den gasförmigen Zustand, ohne dass dabei die Siedetemperatur der Flüssigkeit erreicht wird.

Die Verringerung der Verdunstung einer Flüssigkeit aus einem Flüssigkeitsreservoir im Sinne der Erfindung bedeutet, dass die schwimmfähigen Formteile die Oberfläche der Flüssigkeit so bedecken, dass die Verdunstung der bedeckten Flüssigkeit im Vergleich zur unbedeckten Flüssigkeit erschwert und somit erfindungsgemäß verringert und besonders bevorzugt verhindert wird.

Das erfindungsgemäße schwimmfähige Formteil eignet sich neben der Verringerung der Verdunstung von Flüssigkeiten aus Flüssigkeitsreservoirs auch zur thermischen Isolierung von Flüssigkeitsreservoirs. Da die Wassertemperatur ein wesentlicher Parameter für die Wachstumsraten von Fischen oder Schalentieren ist, kann es erforderlich sein, in solchen Brutumgebungen eine bestimmte Temperatur einzustellen und zu halten.

Die erfindungsgemäßen schwimmfähigen Formteile eignen sich auch, um die Verdunstung von umweltverschmutzenden Flüssigkeiten, wie beispielsweise Benzin, zu reduzieren, die beispielsweise von einem Tankwagen verschüttet wurden und durch eine Schwimmbarriere begrenzt werden sollen.

Die Schwimmfähigkeit des Formteils im Sinne der Erfindung bedeutet, dass das Formteil im Bereich der Oberfläche einer Flüssigkeit verbleibt ohne vollständig in die Flüssigkeit einzutauchen oder in dieser zu versinken.

Die Schwimmfähigkeit des Formteils im Sinne der Erfindung wird durch eine im Vergleich zur der Flüssigkeit kleineren geometrischen Dichte des erfindungsgemäßen Formteils erzielt.

Die Gesamtheit der mehreren Formteile, die einen im Wesentlichen geschlossenen Flächenverbund bilden, lässt sich durch eine diese Gesamtheit umfassende, umrandende geschlossene Kurve welche eine Fläche A_{ges} definiert, beschreiben. In diesem Zusammenhang bedeutet die Ausbildung eines im Wesentlichen geschlossenen Flächenverbunds durch die mehreren Formteile, dass die durch die mehreren Formteile bedeckte Fläche mindestens 95 % der Fläche A_{ges} bedeckt.

### Geometrie Formteil

Das erfindungsgemäße Formteil ist in einer horizontalen Schwimmebene mehreckig und weist jeweils zwischen zwei benachbarten Ecken entlang der Schwimmebene jeweils eine Stirnseite auf. Die Stirnseiten sind derart beschaffen, dass mehrere Formteile derart benachbart angeordnet werden können, dass sich gegenüberliegende Stirnseiten benachbarter Formteile berühren, vorzugsweise im Wesentlichen vollflächig, und die mehreren Formteile einen im Wesentlichen geschlossenen Flächenverbund ausbilden.

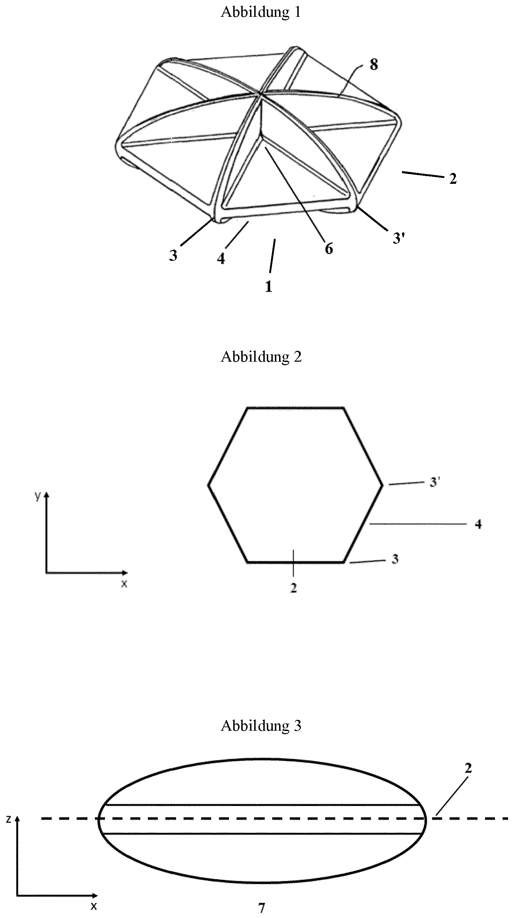

Dies wird nachfolgend anhand der Abbildungen 1 bis 5 für bevorzugte Ausführungsformen des erfindungsgemäßen Formteils schematisch näher erläutert.

Abbildung 1 zeigt schematisch eine bevorzugte Ausführungsform des schwimmfähigen Formteils (1) mit horizontaler Schwimmebene (2), benachbarten Ecken (3,3'), dazwischenliegender Stirnseite (4), Zentrum (6), sowie Rippen (8).

Abbildung 2 zeigt in einer schematischen Aufsicht auf die horizontale Schwimmebene (2) des schwimmfähigen Formteils (1) gemäß Abbildung 1 sowie beispielhaft zwei benachbarte Ecken (3, 3'), welche Stirnseite (4) einschließen.

Abbildung 3 zeigt eine schematische Seitenansicht auf die vertikale Schwimmebene (7) des schwimmfähigen Formteils (1) gemäß Abbildung 1. Die horizontale Schwimmebene (2) ist als gestrichelte Linie eingezeichnet.

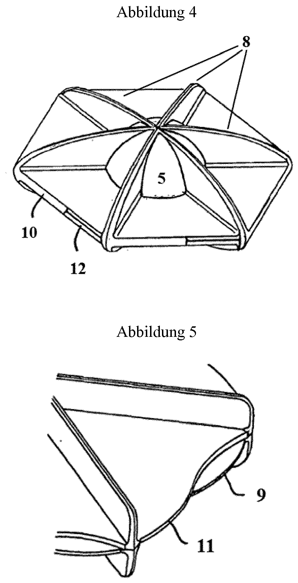

Abbildung 4 zeigt schematisch eine andere bevorzugte Ausführungsform des schwimmfähigen Formteils (1) aus der Vogelperspektive mit geneigten Stirnflächen (10,12), Rippen (8) sowie integrierter Auftriebskugel (5). Jede Stirnseite (4) umfasst jeweils eine geneigte erste Stirnfläche (10) und eine gegensätzlich geneigte zweite Stirnfläche (12), wobei die geneigte erste Stirnfläche (10) der Stirnseite (4) des schwimmfähigen Formteils (1) dazu hergerichtet ist, mit einer gegensätzlich geneigten zweiten Stirnfläche (12') der Stirnseite (4') eines benachbarten schwimmfähigen Formteils (1', nicht gezeigt) verbunden zu werden; und wobei die geneigte zweite Stirnfläche (12) der Stirnseite (4) des schwimmfähigen Formteils (1) dazu hergerichtet ist, mit einer gegensätzlich geneigten ersten Stirnfläche (10') der Stirnseite (4') eines benachbarten schwimmfähigen Formteils (1', nicht gezeigt) verbunden zu werden.

Abbildung 5 eine andere bevorzugte Ausführungsform des schwimmfähigen Formteils (1) mit komplexen Stirnflächen (9,11). Die komplexen Stirnflächen können beispielsweise durch eine horizontale Unterteilung der Stirnseiten (4) in jeweils zwei Ebenen verwirklicht werden, wie in Abbildung 5 gezeigt. Jede Stirnseite (4) umfasst jeweils eine komplexe erste Stirnfläche (9) und eine gegensätzlich komplexe zweite Stirnfläche (11), wobei die komplexe erste Stirnfläche (9) der Stirnseite (4) des schwimmfähigen Formteils (1) dazu hergerichtet ist, mit einer gegensätzlich komplexen zweiten Stirnfläche (11') der Stirnseite (4') eines benachbarten schwimmfähigen Formteils (1', nicht gezeigt) verbunden zu werden; und wobei die komplexe zweite Stirnfläche (11) der Stirnseite (4) des schwimmfähigen Formteils (1) dazu hergerichtet ist, mit einer gegensätzlich komplexen ersten Stirnfläche (9') der Stirnseite (4') eines benachbarten schwimmfähigen Formteils (1', nicht gezeigt) verbunden zu werden.

### Eine oder mehrere Stirnseiten

Das erfindungsgemäße schwimmfähige Formteil ist bevorzugt derart beschaffen, dass es in der horizontalen Schwimmebene bevorzugt mehreckig ist und jeweils zwischen zwei benachbarten Ecken entlang der Schwimmebene jeweils eine Stirnseite aufweist.

In einer bevorzugten Ausführungsform weist das erfindungsgemäße Formteil zwischen allen jeweils benachbarten Ecken jeweils eine Stirnseite. Die Stirnseiten jeweils zwischen zwei benachbarten Ecken können unabhängig voneinander unterschiedliche Größe, Form und Ausrichtung haben.

Die Stirnseiten sind bevorzugt derart beschaffen, dass mehrere Formteile derart benachbart angeordnet werden können, dass sich gegenüberliegende Stirnseiten benachbarter Formteile berühren, vorzugsweise im Wesentlichen vollflächig, und die mehreren Formteile einen im Wesentlichen geschlossenen Flächenverbund ausbilden. Dadurch ist es möglich, dass mehrere identische schwimmfähige Formteile zusammen, ohne jedoch fest miteinander verbunden zu sein, einen im Wesentlichen geschlossenen Flächenverbund bilden, um das Verdunsten von Flüssigkeit zu reduzieren.

Darüber hinaus stellt die vollflächige Berührung der Stirnseiten einander benachbarter Formteile sicher, dass die einen im Wesentlichen geschlossenen Flächenverbund ausbildenden mehreren Formteile, wenn sie einander berühren, einen wirksamen Widerstand gegen äußere Einwirkungen wie beispielsweise starke Winde aufweisen, d.h. dass der Wind nicht zu einer Auflösung des Flächenverbunds führt.

Voraussetzung für eine optimale Abdeckung der Flüssigkeitsoberfläche ist, dass eine ausreichende Anzahl von Formteilen zur Verfügung steht, um möglichst die gesamte Flüssigkeitsoberfläche abdecken zu können.

Bevorzugt weisen die Stirnseiten im Wesentlichen die gleiche Länge und/oder Breite auf, bevorzugt die jeweils gleiche Größe, Form und Ausrichtung.

Bevorzugt umfassen die einzelnen Stirnseiten jeweils unterschiedliche Stirnflächen als Teilbereiche, welche sich insbesondere in Größe, Form und/oder Ausrichtung voneinander unterscheiden können. In einer bevorzugten Ausführungsform des schwimmfähigen Formteils sind die Stirnseiten dazu hergerichtet, das schwimmfähige Formteil mit der Stirnseite eines weiteren schwimmfähigen Formteils zu verbinden.

Dabei sind die Stirnseiten bevorzugt dazu hergerichtet, das schwimmfähige Formteil mit einer Stirnseite eines weiteren schwimmfähigen Formteils zu verbinden; wobei jede Stirnseite jeweils eine erste Stirnfläche und eine zweite Stirnfläche umfasst, wobei die erste Stirnfläche der Stirnseite des schwimmfähigen Formteils dazu hergerichtet ist, mit einer korrespondierend überlappenden zweiten Stirnfläche der Stirnseite eines benachbarten schwimmfähigen Formteils verbunden zu werden; und wobei die zweite Stirnfläche der Stirnseite des schwimmfähigen Formteils dazu hergerichtet ist, mit einer korrespondierend überlappenden ersten Stirnfläche der Stirnseite eines benachbarten schwimmfähigen Formteils verbunden zu werden.

Die korrespondierende Überlappung kann beispielsweise durch jeweils gegensätzlich geneigte erste und zweite Stirnflächen oder durch komplexe erste und zweite Stirnflächen verwirklicht werden, welche zueinander komplementär sind.

Im Falle von jeweils gegensätzlich geneigten ersten und zweiten Stirnflächen umfasst bevorzugt jede Stirnseite jeweils eine geneigte erste Stirnfläche und eine gegensätzlich geneigte zweite Stirnfläche, wobei die geneigte erste Stirnfläche der Stirnseite des schwimmfähigen Formteils dazu hergerichtet ist, mit einer gegensätzlich geneigten zweiten Stirnfläche der Stirnseite eines benachbarten schwimmfähigen Formteils verbunden zu werden; und wobei die geneigte zweite Stirnfläche der Stirnseite des schwimmfähigen Formteils dazu hergerichtet ist, mit einer gegensätzlich geneigten ersten Stirnfläche der Stirnseite eines benachbarten schwimmfähigen Formteils verbunden zu werden.

Im Falle von jeweils gegensätzlich komplexen ersten und zweiten Stirnflächen umfasst bevorzugt jede Stirnseite jeweils eine komplexe erste Stirnfläche und eine gegensätzlich komplexe zweite Stirnfläche, wobei die komplexe erste Stirnfläche der Stirnseite des schwimmfähigen Formteils dazu hergerichtet ist, mit einer gegensätzlich komplexen zweiten Stirnfläche der Stirnseite eines benachbarten schwimmfähigen Formteils verbunden zu werden; und wobei die komplexe zweite Stirnfläche der Stirnseite des schwimmfähigen Formteils dazu hergerichtet ist, mit einer gegensätzlich komplexen ersten Stirnfläche der Stirnseite eines benachbarten schwimmfähigen Formteils verbunden zu werden.

In beiden Fällen ist also sinngemäß die erste Stirnfläche zu zweiten Stirnfläche komplementär und umgekehrt (männlich/weiblich, Kopf/Schwanz, plus/minus, positiv/negativ, etc.). Sind zwei benachbarte Formteile in erfindungsgemäßer Weise gegenüberliegend voneinander angeordnet, so dass sich zwei Stirnseiten berühren, so sind die beiden ersten Stirnflächen und die beiden zweiten Stirnflächen bevorzugt invers zueinander angeordnet.

Bevorzugt sind die Stirnseiten magnetisch und dazu hergerichtet, das schwimmfähige Formteil mit einer magnetischen Stirnseite eines weiteren schwimmfähigen Formteils zu verbinden.

Dabei sind die Stirnseiten bevorzugt magnetisch und dazu hergerichtet sind, das schwimmfähige Formteil mit einer Stirnseite eines weiteren schwimmfähigen Formteils zu verbinden; wobei jede Stirnseite jeweils eine magnetische erste Stirnfläche und eine gegenpolig magnetische zweite Stirnfläche umfasst, wobei die magnetische erste Stirnfläche der Stirnseite des schwimmfähigen Formteils dazu hergerichtet ist, mit einer gegenpolig magnetischen zweiten Stirnfläche der Stirnseite eines benachbarten schwimmfähigen Formteils verbunden zu werden; und wobei die magnetische zweite Stirnfläche der Stirnseite des schwimmfähigen Formteils dazu hergerichtet ist, mit einer gegenpolig magnetischen ersten Stirnfläche der Stirnseite eines benachbarten schwimmfähigen Formteils verbunden zu werden.

### Beschichtung

Bevorzugt bedeckt der Flächenverbund aus den mehreren Formteilen mindestens 90% der durch die geschlossene Hüllkurve aller Elemente definierten Flüssigkeitsoberfläche.

Das erfindungsgemäße schwimmfähige Formteil kann gefärbt sein, wenn dies zweckmäßig ist, z.B. schwarz oder weiß.

In einer bevorzugten Ausführungsform weist das schwimmfähigen Formteil zumindest teilweise eine Beschichtung aufweist, welche korrosionsbeständig; und/oder beständig gegen organische Lösemittel; und/oder resistent gegen Parasitenbefall; und/oder resistent gegen Algenbefall; und/oder resistent gegen Fäule ist.

### Größe Formteil

Bei der praktischen Realisierung des erfindungsgemäßen schwimmfähigen Formteils ist es zweckmäßig, es in einer physischen Größe herzustellen, die verhindert, dass das Produkt z.B. in übliche Rohrsysteme eingesaugt wird, wodurch das System einschließlich der Pumpe des Rohrsystems blockiert oder beschädigt werden kann.

### horizontale Schwimmebene - Geometrien

In einer bevorzugten Ausführungsform des schwimmfähigen Formteils ist die horizontale Schwimmebene dreieckig, viereckig, sechseckig, oder achteckig; bevorzugt dreieckig, viereckig oder sechseckig; und besonders bevorzugt sechseckig.

Ist das Formteil dreieckig, so ist das Dreieck bevorzugt gleichschenklig, d.h. alle Winkel im Dreieck sind identisch und betragen jeweils 60°. Ist das Formteil viereckig, so ist das Formteil in einer bevorzugten Ausführungsform rechteckig oder quadratisch, d.h. alle Winkel im Viereck sind identisch und betragen jeweils 90°; in einer anderen Ausführungsform rhombisch. Ist das Formteil sechseckig, so ist das Sechseck bevorzugt regelmäßig, d.h. bevorzugt sind alle Winkel im Sechseck gleich und betragen jeweils 120°.

### Auftriebskugel

In einer bevorzugten Ausführungsform enthält das schwimmfähige Formteil zusätzlich eine integrierte Auftriebskugel, wobei die integrierte Auftriebskugel ihr Zentrum bevorzugt im Massenzentrum des Formteils hat, und wobei die integrierte Auftriebskugel bevorzugt vollständig oder teilweise hohl ist, und besonders bevorzugt mit Luft gefüllt ist.

### Ausdehnung in vertikaler Ebene

In einer bevorzugten Ausführungsform des schwimmfähigen Formteil, welches bevorzugt ein in der horizontalen Schwimmebene liegendes Zentrum aufweist, nimmt die Ausdehnung des Formteils in einer vertikalen Ebene von der Stirnseite des Formteils zum Zentrum des Formteils zu, wobei bevorzugt die Zunahme der Ausdehnung des Formteils in der vertikalen Ebene durch Rippen hervorgerufen wird.

Die Zunahme der Ausdehnung des Formteils in der vertikalen Ebene kann auch durch ein ungebrochenes, festes Material generiert werden, das gegebenenfalls hohl sein kann oder innen mit einem wasserverdrängenden, leichten Material versehen sein kann, wie z.B. ein expandierbares Polystyrol.

Das Verwenden von Rippen ist jedoch vorteilhaft hinsichtlich des Materialverbrauchs und vereinfacht den Herstellungsprozess, was in Kombination eine Verringerung der Gesamtkosten bewirkt.

Die Zunahme der Ausdehnung des schwimmfähigen Formteils in der vertikalen Ebene bietet den Vorteil, dass mehrere schwimmfähige Formteile nicht gestapelt werden können. Dies bedeutet, dass mehrere schwimmfähigen Formteil im schwimmenden Zustand auf der Flüssigkeitsoberfläche nicht übereinander zu liegen kommen, sondern voneinander gleiten, bis sie sich wie beabsichtigt derart benachbart anordnen, dass sich gegenüberliegende Stirnseiten benachbarter Formteile berühren, vorzugsweise im Wesentlichen vollflächig, und die mehreren Formteile einen im Wesentlichen geschlossenen Flächenverbund ausbilden. Dadurch ist sichergestellt, dass die mehreren schwimmfähigen Formteile nicht schichtweise (d.h. übereinander) angeordnet werden können, sondern wie gewünscht voneinander abgleiten, bis alle Formteile auf der Flüssigkeitsoberfläche parallel schwimmen und diese optimal abdecken.

In einer bevorzugten Ausführungsform ist das schwimmfähige Formteil zusätzlich ausgestattet mit Messinstrumenten, bevorzugt mit Messinstrumenten zur Bestimmung von Temperatur, Feuchtigkeit, Windgeschwindigkeit, Lichtintensität, Leitfähigkeit und/oder pH-Wert; und/oder Funksender-/Empfänger-Systemen; und/oder Funk- und/oder sattelitengestützten Ortungsgeräten; und/oder elektronischen Kennzeichnungseinrichtungen, bevorzugt RFID-Markierungen.

### Ab deckungsgrad

Erfindungsgemäß bedeutet die Ausbildung eines im Wesentlichen geschlossenen Flächenverbunds durch die mehreren Formteile, dass die durch die mehreren Formteile bedeckte Fläche bevorzugt höchstens 5 % an nicht durch die mehreren Formteile bedeckten Lücken aufweist.

Es ist ebenfalls Teil der vorliegenden Erfindung, dass der Abdeckungsgrad an der durch die mehreren Formteile bedeckten Fläche bestimmt wird.

Der Abdeckungsgrad kann beispielsweise durch die digitale Bildverarbeitung von Daten einer oder mehrerer Digitalkameras oder durch die Positionsbestimmung der mehreren schwimmfähigen Formteile bestimmt werden.

Da der Abdeckungsgrad die Abdeckungseffizienz und somit ein Indikator für die Verringerung der Verdunstung von Flüssigkeit ist, kann eine aktuelle Bestimmung des Abdeckungsgrades bei der Dokumentation der Abdeckungseffizienz verwendet werden.

### Naturfaserverbundwerktsoff - allgemein

Das erfindungsgemäße Formteil enthält einen Naturfaserverbundwerkstoff, welcher aus Zuckerrüben gewonnene Partikel umfasst, die in einer Polymermatrix eingebettet sind. In einer bevorzugten Ausführungsform besteht das erfindungsgemäße Formteil im Wesentlichen aus dem Naturfaserverbundwerkstoff. In einer bevorzugten Ausführungsform besteht der Naturfaserverbundwerkstoff im Wesentlichen aus den Zuckerrüben gewonnenen Partikeln sowie der Polymermatrix.

Ein Naturfaserverbundwerkstoff im Sinne der Erfindung umfasst im Allgemeinen bevorzugt mindestens zwei Hauptkomponenten (eine Polymermatrix sowie Fasern welche in die Polymermatrix eingebettet sind). Naturfaserverbundwerkstoffe sind Mehrphasen- oder Mischwerkstoffe. Durch gegenseitige Wechselwirkungen der beiden Komponenten erhält dieser Werkstoff höherwertige Eigenschaften als jede der beiden einzeln beteiligten Komponenten.

Dabei kann der erfindungsgemäße Naturfaserverbundwerkstoff als Halbfertigerzeugnis (Zwischenprodukt) vorliegen, welcher durch geeignete Methoden, insbesondere Thermoformen wie z.B. Schmelzextrusion, Spritzguss, Pultrusion, Pressen, etc. anschließend zu einem Formteil als Endprodukt geformt werden kann. Dies ist insbesondere dann möglich, wenn die Polymermatrix im Wesentlichen thermoplastische Polymere oder noch nicht vollständig gehärtete duroplastische Polymere umfasst. In diesem Fall kann der erfindungsgemäße Naturfaserverbundwerkstoff bevorzugt aus den erfindungsgemäßen Partikeln, einer geeigneten Polymermatrix, ggf. einem oder mehreren Haftvermittlern und ggf. weiteren Zuschlagsstoffen in geeigneter Form bereitgestellt werden, wie sie für die weitere Verarbeitung, insbesondere durch Thermoformen zweckmäßig ist. Beispielsweise kann der erfindungsgemäße Naturfaserverbundwerkstoff als Pulver, Granulat oder in Form von Pellets vorliegen.

Alternativ ist es jedoch auch möglich, dass die erfindungsgemäßen Partikel in einem oder in mehreren konzertierten Arbeitsschritten direkt zu einem endgültigen Formteil aus Naturfaserverbundwerkstoff umgesetzt werden, ohne dass während des Verfahrens ein Naturfaserverbundwerkstoff als Halbfertigerzeugnis isoliert wird. Beispielsweise können die erfindungsgemäßen Partikel alternativ mit einer geeigneten Polymermatrix, ggf. einem oder mehreren Haftvermittlern und ggf. weiteren Zuschlagsstoffen in einem Schmelzextruder gemischt und durch Extrusion bereits in die endgültige, gewünschte Form des gewünschten Formteils (Endprodukt) gebracht werden.

Zum Zwecke der Beschreibung umfasst, sofern im Einzelfall nicht ausdrücklich etwas anderes definiert wird, der Begriff "Naturfaserverbundwerkstoff' grundsätzlich beide Möglichkeiten (sowohl Halbfertigerzeugnis als auch Endprodukt) und der Begriff "Formteil" nur das Endprodukt (d.h. kein Halbfertigerzeugnis), wobei jeweils nicht ausgeschlossen ist, dass dieses Endprodukt anschließend ggf. weiteren Behandlungsschritten unterzogen werden kann.

### Polymermatrix

Der erfindungsgemäße Naturfaserverbundwerkstoff umfasst aus Zuckerrüben gewonnene Partikel und eine Polymermatrix, wobei die Partikel in die Polymermatrix eingebettet sind.

Bevorzugt umfasst die Polymermatrix ein Polymer ausgewählt aus der Gruppe bestehend aus thermoplastischen Polymeren und duroplastischen Polymeren.

Beispiele thermoplastischer Polymere umfassen, sind jedoch nicht eingeschränkt auf Polyolefine, Polyethylen, Polypropylen, Polystyrol, Polyvinylchlorid, Polyamide, Polyester, Polyethylenterephthalat, Polylactat, Polylactid, Polycarbonat, Polyacrylate, Polyacrylnitril, Polymethylmethacrylat, Polyvinylacetat, Acrylnitril-Butadien-Styrol, Polyetheretherketon, sowie deren Mischungen und Copolymerisate. Polyethylen, Polypropylen, Polystyrol, Polycarbonat und Polyamide sind besonders bevorzugt.

In einer besonders bevorzugten Ausführungsform umfasst die Polymermatrix oder besteht die Polymermatrix aus biologisch abbaubaren Polymeren.

Biologisch abbaubare Polymere wie Polyester, Polyesteramiden, Polyurethanen oder Polyvinylalkohol können dabei bevorzugt als Gemisch mit thermoplastischer Stärke eingesetzt werden. Andere geeignete biologisch abbaubare Polymere sind auf Basis von Cellulose, Polymilchsäure oder Polyhydroxybuttersäure.

Beispiele duroplastischer Polymere (Kunstharze) umfassen reaktive Komponenten, ggf. als Mehrkomponentensysteme, welche ggf. unter Einfluss von Strahlung, Wärme oder anderen äußeren Einflüssen dreidimensionale Netzwerke bilden und aushärten. Bevorzugte Beispiele umfassen, sind jedoch nicht eingeschränkt auf Phenolharze, Aminoplaste (insbesondere Harnstoff-Formaldehyd-Harze und Melamin-Formaldehyd-Harze), Epoxidharze, Polyesterharze, ABS-Harze sowie deren Mischungen und Copolymerisate. Epoxidharze und Phenolharze sind besonders bevorzugt.

### Gewichtsgehalt Polymermatrix

In bevorzugten Ausführungsformen beträgt der Gehalt der Polymermatrix mindestens 5 Gew.-%, mindestens 10 Gew.-%, mindestens 15 Gew.-%, mindestens 20 Gew.-%, mindestens 25 Gew.-%, mindestens 30 Gew.-%, mindestens 35 Gew.-%, mindestens 40 Gew.-%, mindestens 45 Gew.-%, mindestens 50 Gew.-%, mindestens 55 Gew.-%, mindestens 60 Gew.-%, mindestens 65 Gew.-%, mindestens 70 Gew.-%, mindestens 75 Gew.-%, mindestens 80 Gew.-%, mindestens 85 Gew.-%, mindestens 90 Gew.-%, oder mindestens 95 Gew.-%, jeweils bezogen auf das Gesamtgewicht des Naturfaserverbundwerkstoffs.

In bevorzugten Ausführungsformen beträgt der Gehalt der Polymermatrix höchstens 95 Gew.-%, höchstens 90 Gew.-%, höchstens 85 Gew.-%, höchstens 80 Gew.-%, höchstens 75 Gew.-%, höchstens 70 Gew.-%, höchstens 65 Gew.-%, höchstens 60 Gew.-%, höchstens 55 Gew.-%, höchstens 50 Gew.-%, höchstens 45 Gew.-%, höchstens 40 Gew.-%, höchstens 35 Gew.-%, höchstens 30 Gew.-%, höchstens 25 Gew.-%, höchstens 20 Gew.-%, höchstens 15 Gew.-%, höchstens 10 Gew.-%, oder höchstens 5 Gew.-%, jeweils bezogen auf das Gesamtgewicht des Naturfaserverbundwerkstoffs.

Bevorzugt liegt der Gehalt der Polymermatrix im Bereich von 20 bis 99,9 Gew.-%, bezogen auf das Gesamtgewicht des Naturfaserverbundwerkstoffs. In bevorzugten Ausführungsformen liegt der Gehalt der Polymermatrix im Bereich von 10±5 Gew.-%; 20±15 Gew.-%, 20±10 Gew.-%, 20±5 Gew.-%; 30±25 Gew.-%, 30±20 Gew.-%, 30±15 Gew.-%, 30±10 Gew.-%, 30±5 Gew.-%; 40±35 Gew.-%, 40±30 Gew.-%, 40±25 Gew.-%, 40±20 Gew.-%, 40±15 Gew.-%, 40±10 Gew.-%, 40±5 Gew.-%; 50±45 Gew.-%, 50±40 Gew.-%, 50±35 Gew.-%, 50±30 Gew.-%, 50±25 Gew.-%, 50±20 Gew.-%, 50±15 Gew.-%, 50±10 Gew.-%, 50±5 Gew.-%; 60±35 Gew.-%, 60±30 Gew.-%, 60±25 Gew.-%, 60±20 Gew.-%, 60±15 Gew.-%, 60±10 Gew.-%, 60±5 Gew.-%; 70±25 Gew.-%, 70±20 Gew.-%, 70±15 Gew.-%, 70±10 Gew.-%, 70±5 Gew.-%; 80±15 Gew.-%, 80±10 Gew.-%, 80±5 Gew.-%; oder 90±5 Gew.-%; jeweils bezogen auf das Gesamtgewicht des Naturfaserverbundwerkstoffs.

### Partikel

Der erfindungsgemäße Naturfaserverbundwerkstoff umfasst aus Zuckerrüben gewonnene Partikel und eine Polymermatrix, wobei die Partikel in die Polymermatrix eingebettet sind.

Die Partikel wurden aus Zuckerrüben gewonnen.

### Kohlenhydratgehalt

Bevorzugt beträgt der Gehalt an Saccharose in den Partikeln höchstens 25 Gew.-%, bevorzugter höchstens 20 Gew.-%, noch bevorzugter höchstens 15 Gew.-%, am bevorzugtesten höchstens 10 Gew.-%, und insbesondere höchstens 5 Gew.-%, jeweils bezogen auf das Trockengewicht der Partikel; und wobei mindestens 30 Gew.-%, bevorzugter mindestens 40 Gew.-%, noch bevorzugter mindestens 50 Gew.-%, am bevorzugtesten mindestens 60 Gew.-%, und insbesondere mindestens 70 Gew.-% der Partikel, jeweils bezogen auf das Gesamtgewicht der Partikel.

Bevorzugt weisen die Partikel eine Korngröße im Bereich von 112 bis 800 µm auf.

Die Partikel können sphärisch sein oder aber auch andere Formen aufweisen, z.B. Zylinder, oder auch faserig sein.

Die erfindungsgemäßen Partikel umfassen Partikel welche aus Zuckerrüben gewonnen wurden. Demzufolge können die erfindungsgemäßen Partikel neben den aus Zuckerrüben gewonnenen Partikeln auch andere Partikel enthalten. In einer bevorzugten Ausführungsform bestehen die erfindungsgemäßen Partikel im Wesentlichen aus Partikeln, welche aus Zuckerrüben gewonnen wurden.

Erfindungsgemäß handelt es sich bevorzugt bei den Zuckerrüben (*Beta vulgaris*) um solche Arten, welche vorzugsweise zur Gewinnung von Saccharose angebaut werden. Erfindungsgemäß werden bevorzugt die Reste der Zuckerrüben eingesetzt, welche nach Abtrennung des Großteils der ursprünglich enthaltenen Saccharose, üblicherweise durch wässrige Extraktion, zurückbleiben. Häufig liegen diese Reste der Zuckerrüben in Form von sog. Zuckerrübenschnitzeln vor.

Aus diesem Grund ist auch der Restgehalt an Saccharose, welche nicht aus den Zuckerrüben gewonnen werden konnte, in den Partikeln gering und beträgt höchstens 25 Gew.-%, bevorzugter höchstens 20 Gew.-%, noch bevorzugter höchstens 15 Gew.-%, am bevorzugtesten höchstens 10 Gew.-%, und insbesondere höchstens 5 Gew.-%, jeweils bezogen auf das Trockengewicht der Partikel.

Auch der Gehalt an anderen Mono- und Disacchariden, welche von Saccharose verschieden sind und in den Partikeln ggf. enthalten sein können, ist vorzugsweise gering.

Bevorzugt beträgt der Gehalt an Glukose in den Partikeln höchstens 5,0 Gew.-%, bevorzugter höchstens 4,0 Gew.-%, noch bevorzugter höchstens 3,0 Gew.-%, am bevorzugtesten höchstens 2,0 Gew.-%, und insbesondere höchstens 1,0 Gew.-%, jeweils bezogen auf das Trockengewicht der Partikel.

Bevorzugt beträgt der Gehalt an Fruktose in den Partikeln höchstens 5,0 Gew.-%, bevorzugter höchstens 4,0 Gew.-%, noch bevorzugter höchstens 3,0 Gew.-%, am bevorzugtesten höchstens 2,0 Gew.-%, und insbesondere höchstens 1,0 Gew.-%, jeweils bezogen auf das Trockengewicht der Partikel.

### Ligningehalt

Die erfindungsgemäßen Partikel können Lignin enthalten, wobei der Gehalt an Lignin allerdings bevorzugt vergleichsweise gering ist. Bevorzugt beträgt der Gehalt an Lignin in den Partikeln höchstens 5,0 Gew.-%, bevorzugter höchstens 4,0 Gew.-%, noch bevorzugter höchstens 3,5 Gew.-%, am bevorzugtesten höchstens 3,0 Gew.-%, und insbesondere höchstens 2,5 Gew.-%, jeweils bezogen auf das Trockengewicht der Partikel.

Die erfindungsgemäßen Partikel enthalten typischerweise Cellulose und Hemicellulose, welche wenigstens teilweise in Form von Fasern vorliegen. Durch diese Fasern eignet sich die erfindungsgemäße Zusammensetzung insbesondere zur Herstellung von Naturfaserverbundwerkstoffen.

### Pektingehalt

Zuckerrüben haben von Natur aus einen vergleichsweise hohen Gehalt an Pektin.

Bevorzugt weisen die erfindungsgemäßen Partikel den Gehalt an Pektin auf, wie er nach Extraktion der Saccharose in den Zuckerrübenschnitzeln zurückbleibt, d.h. werden zur Verringerung des Gehalts an Pektin nicht besonders behandelt. Bevorzugt liegt der Gehalt an Pektin im Bereich von 14 bis 34 Gew.-%, bevorzugter 16 bis 32 Gew.-%, noch bevorzugter 18 bis 30 Gew.-%, am bevorzugtesten 20 bis 28 Gew.-%, und insbesondere 22 bis 26 Gew.-%, jeweils bezogen auf das Trockengewicht der Partikel.

### (Hemi-)cellulosegehalt

Bevorzugt beträgt der Gehalt an Cellulose in den Partikeln mindestens 2,5 Gew.-%, bevorzugter mindestens 5,0 Gew.-%, noch bevorzugter mindestens 10 Gew.-%, am bevorzugtesten mindestens 15 Gew.-%, und insbesondere mindestens 20 Gew.-%, jeweils bezogen auf das Trockengewicht der Partikel.

Bevorzugt beträgt der Gehalt an Cellulose in den Partikeln höchstens 45 Gew.-%, bevorzugter höchstens 40 Gew.-%, noch bevorzugter höchstens 35 Gew.-%, am bevorzugtesten höchstens 30 Gew.-%, und insbesondere höchstens 25 Gew.-%, jeweils bezogen auf das Trockengewicht der Partikel.

Bevorzugt liegt der Gehalt an Cellulose in den Partikeln im Bereich von 22±15 Gew.-%, bevorzugter 22±12 Gew.-%, noch bevorzugter 22±9 Gew.-%, am bevorzugtesten 22±6 Gew.-%, und insbesondere 22±3 Gew.-%, jeweils bezogen auf das Trockengewicht der Partikel.

Bevorzugt beträgt der Gehalt an Hemicellulose in den Partikeln mindestens 2,5 Gew.-%, bevorzugter mindestens 5,0 Gew.-%, noch bevorzugter mindestens 10 Gew.-%, am bevorzugtesten mindestens 15 Gew.-%, und insbesondere mindestens 20 Gew.-%, jeweils bezogen auf das Trockengewicht der Partikel.

Bevorzugt beträgt der Gehalt an Hemicellulose in den Partikeln höchstens 45 Gew.-%, bevorzugter höchstens 40 Gew.-%, noch bevorzugter höchstens 35 Gew.-%, am bevorzugtesten höchstens 30 Gew.-%, und insbesondere höchstens 25 Gew.-%, jeweils bezogen auf das Trockengewicht der Partikel.

Bevorzugt liegt der Gehalt an Hemicellulose in den Partikeln im Bereich von 22±15 Gew.-%, bevorzugter 22±12 Gew.-%, noch bevorzugter 22±9 Gew.-%, am bevorzugtesten 22±6 Gew.-%, und insbesondere 22±3 Gew.-%, jeweils bezogen auf das Trockengewicht der Partikel.

### Wassergehalt

Die Partikel können für die verschiedenen Anforderungsprofile an die Restfeuchte unterschiedliche Feuchtegrade aufweisen, welche ggf. durch Trocknen unter geeigneten Bedingungen eingestellt werden können.

In bevorzugten Ausführungsformen weisen die Partikel einen Wassergehalt von höchstens 10 Gew.-%, höchstens 9,0 Gew.-%, höchstens 8,0 Gew.-%, höchstens 7,0 Gew.-%, höchstens 6,0 Gew.-%, höchstens 5,0 Gew.-%, höchstens 4,0 Gew.-%, höchstens 3,0 Gew.-%, höchstens 2,0 Gew.-%, oder höchstens 1,0 Gew.-% auf. jeweils in Bezug auf das Gesamtgewicht der Partikel.

In bevorzugten Ausführungsformen liegt der Wassergehalt im Bereich von 5,0±4,9 Gew.-%, oder 7,5±7,4 oder 7,5±5,0 Gew.-%, jeweils bezogen auf das Gesamtgewicht der Partikel.

### Proteingehalt

Die erfindungsgemäßen Partikel können Rohprotein enthalten (*crudeprotein*).

Bevorzugt beträgt der Gehalt an Rohprotein in den Partikeln mindestens 1,0 Gew.-%, bevorzugter mindestens 3,0 Gew.-%, noch bevorzugter mindestens 5,0 Gew.-%, am bevorzugtesten mindestens 7,0 Gew.-%, und insbesondere mindestens 9,0 Gew.-%, jeweils bezogen auf das Trockengewicht der Partikel.

Bevorzugt beträgt der Gehalt an Rohprotein in den Partikeln höchstens 18 Gew.-%, bevorzugter höchstens 16 Gew.-%, noch bevorzugter höchstens 14 Gew.-%, am bevorzugtesten höchstens 12 Gew.-%, und insbesondere höchstens 10 Gew.-%, jeweils bezogen auf das Trockengewicht der Partikel.

Bevorzugt liegt der Gehalt an Rohprotein in den Partikeln im Bereich von 10±9 Gew.-%, bevorzugter 10±8 Gew.-%, noch bevorzugter 10±7 Gew.-%, am bevorzugtesten 10±6 Gew.-%, und insbesondere 10±5 Gew.-%, jeweils bezogen auf das Trockengewicht der Partikel.

### Partikelgrößenverteilung

Erfindungsgemäß bevorzugt weisen mindestens 30 Gew.-%, bevorzugter mindestens 40 Gew.-%, noch bevorzugter mindestens 50 Gew.-%, am bevorzugtesten mindestens 60 Gew.-%, und insbesondere mindestens 70 Gew.-% der Partikel, jeweils bezogen auf das Gesamtgewicht der Partikel, eine Korngröße im Bereich von 112 bis 800 µm auf.

Dabei wird die Korngröße vorzugsweise durch Siebanalyse (Siebklassieren) bestimmt. Hierbei wird ein Satz mit nach unten immer feiner werdenden Sieben aufeinander gesetzt. Die zu analysierende Probe wird in das oberste Sieb eingefüllt und der Siebsatz anschließend in eine Siebmaschine eingespannt. Die Maschine rüttelt oder vibriert dann den Siebsatz für einen gewissen Zeitraum.

Ein Partikel, welcher eine Korngröße im Bereich von 112 bis 800 µm aufweist, passiert ein Sieb mit einer Maschenweite von 801 µm und wird von einem Sieb mit einer Maschenweite von 112 µm zurückgehalten.

In bevorzugten Ausführungsformen weisen
- mindestens 2,0 Gew.-%, bevorzugter mindestens 4,0 Gew.-%, noch bevorzugter mindestens 6,0 Gew.-%, am bevorzugtesten mindestens 8,0 Gew.-%, und insbesondere mindestens 10 Gew.-% der Partikel, jeweils bezogen auf das Gesamtgewicht der Partikel, eine Korngröße von weniger als 112 µm auf; und/oder
- mindestens 1,5 Gew.-%, bevorzugter mindestens 3,0 Gew.-%, noch bevorzugter mindestens 4,5 Gew.-%, am bevorzugtesten mindestens 6,0 Gew.-%, und insbesondere mindestens 7,5 Gew.-% der Partikel, jeweils bezogen auf das Gesamtgewicht der Partikel, eine Korngröße im Bereich von 112 bis 200 µm auf; und/oder
- mindestens 2,0 Gew.-%, bevorzugter mindestens 4,0 Gew.-%, noch bevorzugter mindestens 6,0 Gew.-%, am bevorzugtesten mindestens 8,0 Gew.-%, und insbesondere mindestens 11 Gew.-% der Partikel, jeweils bezogen auf das Gesamtgewicht der Partikel, eine Korngröße im Bereich von 201 bis 315 µm auf; und/oder
- mindestens 5,0 Gew.-%, bevorzugter mindestens 10 Gew.-%, noch bevorzugter mindestens 15 Gew.-%, am bevorzugtesten mindestens 20 Gew.-%, und insbesondere mindestens 25 Gew.-% der Partikel, jeweils bezogen auf das Gesamtgewicht der Partikel, eine Korngröße im Bereich von 316 bis 500 µm auf; und/oder
- mindestens 7,5 Gew.-%, bevorzugter mindestens 15 Gew.-%, noch bevorzugter mindestens 22,5 Gew.-%, am bevorzugtesten mindestens 30 Gew.-%, und insbesondere mindestens 37,5 Gew.-% der Partikel, jeweils bezogen auf das Gesamtgewicht der Partikel, eine Korngröße im Bereich von 501 bis 800 µm auf; und/oder
- mindestens 0,5 Gew.-%, bevorzugter mindestens 1,0 Gew.-%, noch bevorzugter mindestens 1,5 Gew.-%, am bevorzugtesten mindestens 2,0 Gew.-%, und insbesondere mindestens 2,5 Gew.-% der Partikel, jeweils bezogen auf das Gesamtgewicht der Partikel, eine Korngröße im Bereich von 801 bis 1000 µm auf; und/oder
- mindestens 0,2 Gew.-%, bevorzugter mindestens 0,4 Gew.-%, noch bevorzugter mindestens 0,6 Gew.-%, am bevorzugtesten mindestens 0,8 Gew.-%, und insbesondere mindestens 1,0 Gew.-% der Partikel, jeweils bezogen auf das Gesamtgewicht der Partikel, eine Korngröße von mehr als 1000 µm auf.

In anderen bevorzugten Ausführungsformen weisen
- höchstens 20 Gew.-%, bevorzugter höchstens 18 Gew.-%, noch bevorzugter höchstens 16 Gew.-%, am bevorzugtesten höchstens 14 Gew.-%, und insbesondere höchstens 12 Gew.-% der Partikel, jeweils bezogen auf das Gesamtgewicht der Partikel, eine Korngröße von weniger als 112 µm auf; und/oder
- höchstens 13,5 Gew.-%, bevorzugter höchstens 12 Gew.-%, noch bevorzugter höchstens 10,5 Gew.-%, am bevorzugtesten höchstens 9,0 Gew.-%, und insbesondere höchstens 8,5 Gew.-% der Partikel, jeweils bezogen auf das Gesamtgewicht der Partikel, eine Korngröße im Bereich von 112 bis 200 µm auf; und/oder
- höchstens 23 Gew.-%, bevorzugter höchstens 21 Gew.-%, noch bevorzugter höchstens 19 Gew.-%, am bevorzugtesten höchstens 17 Gew.-%, und insbesondere höchstens 15 Gew.-% der Partikel, jeweils bezogen auf das Gesamtgewicht der Partikel, eine Korngröße im Bereich von 201 bis 315 µm auf; und/oder
- höchstens 45 Gew.-%, bevorzugter höchstens 40 Gew.-%, noch bevorzugter höchstens 35 Gew.-%, am bevorzugtesten höchstens 30 Gew.-%, und insbesondere höchstens 25 Gew.-% der Partikel, jeweils bezogen auf das Gesamtgewicht der Partikel, eine Korngröße im Bereich von 316 bis 500 µm auf; und/oder
- höchstens 72,5 Gew.-%, bevorzugter höchstens 65 Gew.-%, noch bevorzugter höchstens 57,5 Gew.-%, am bevorzugtesten höchstens 50 Gew.-%, und insbesondere höchstens 42,5 Gew.-% der Partikel, jeweils bezogen auf das Gesamtgewicht der Partikel, eine Korngröße im Bereich von 501 bis 800 µm auf; und/oder
- höchstens 5,5 Gew.-%, bevorzugter höchstens 5,0 Gew.-%, noch bevorzugter höchstens 4,5 Gew.-%, am bevorzugtesten höchstens 4,0 Gew.-%, und insbesondere höchstens 3,5 Gew.-% der Partikel, jeweils bezogen auf das Gesamtgewicht der Partikel, eine Korngröße im Bereich von 801 bis 1000 µm auf; und/oder
- höchstens 1,8 Gew.-%, bevorzugter höchstens 1,6 Gew.-%, noch bevorzugter höchstens 1,4 Gew.-%, am bevorzugtesten höchstens 1,2 Gew.-%, und insbesondere höchstens 1,0 Gew.-% der Partikel, jeweils bezogen auf das Gesamtgewicht der Partikel, eine Korngröße von mehr als 1000 µm auf.

In weiteren bevorzugten Ausführungsformen weisen
- 11±9,0 Gew.-%, bevorzugter 11±7,0 Gew.-%, noch bevorzugter 11±5,0 Gew.-%, am bevorzugtesten 11±3,0 Gew.-%, und insbesondere 11±2,0 Gew.-% der Partikel, jeweils bezogen auf das Gesamtgewicht der Partikel, eine Korngröße von weniger als 112 µm auf; und/oder
- 8,0±7,0 Gew.-%, bevorzugter 8,0±6,0 Gew.-%, noch bevorzugter 8,0±5,0 Gew.-%, am bevorzugtesten 8,0±4,0 Gew.-%, und insbesondere 8,0±3,0 Gew.-% der Partikel, jeweils bezogen auf das Gesamtgewicht der Partikel, eine Korngröße im Bereich von 112 bis 200 µm auf; und/oder
- 13±12 Gew.-%, bevorzugter 13±10 Gew.-%, noch bevorzugter 13±8,0 Gew.-%, am bevorzugtesten 13±6,0 Gew.-%, und insbesondere 13±4,0 Gew.-% der Partikel, jeweils bezogen auf das Gesamtgewicht der Partikel, eine Korngröße im Bereich von 201 bis 315 µm auf; und/oder
- 25±22 Gew.-%, bevorzugter 25±19 Gew.-%, noch bevorzugter 25±16 Gew.-%, am bevorzugtesten 25±13 Gew.-%, und insbesondere 25±10 Gew.-% der Partikel, jeweils bezogen auf das Gesamtgewicht der Partikel, eine Korngröße im Bereich von 316 bis 500 µm auf; und/oder
- 40±35 Gew.-%, bevorzugter 40±30 Gew.-%, noch bevorzugter 40±25 Gew.-%, am bevorzugtesten 40±20 Gew.-%, und insbesondere 40±15 Gew.-% der Partikel, jeweils bezogen auf das Gesamtgewicht der Partikel, eine Korngröße im Bereich von 501 bis 800 µm auf; und/oder
- 3,0±2,5 Gew.-%, bevorzugter 3,0±2,0 Gew.-%, noch bevorzugter 3,0±1,5 Gew.-%, am bevorzugtesten 3,0±1,0 Gew.-%, und insbesondere 3,0±0,5 Gew.-% der Partikel, jeweils bezogen auf das Gesamtgewicht der Partikel, eine Korngröße im Bereich von 801 bis 1000 µm auf; und/oder
- 1,0±0,9 Gew.-%, bevorzugter 1,0±0,7 Gew.-%, noch bevorzugter 1,0±0,5 Gew.-%, am bevorzugtesten 1,0±0,3 Gew.-%, und insbesondere 1,0±0,2 Gew.-% der Partikel, jeweils bezogen auf das Gesamtgewicht der Partikel, eine Korngröße von mehr als 1000 µm auf.

Bevorzugt erfolgt die Bestimmung der Partikelgrößenverteilung gemäß DIN 66143, 66144, 66145, 66160, 66161 sowie DIN ISO 9276, wobei die Verteilung insbesondere über die Verteilungssumme Q3 bzw. den für jede Kornklasse jeweiligen Massenanteil P3 beschrieben werden kann.

Bevorzugte Partikelgrößenverteilungen in Kornklassen als Werte Q3 [%] (Verteilungssumme) sind in nachfolgender Tabelle als Ausführungsformen A¹ bis A⁵ zusammengefasst:

| Kornklasse | A¹ | A² | A³ | A⁴ | A⁵ |
|---|---|---|---|---|---|
| <112 µm | 11±10 | 11±8,0 | 11±6,0 | 11±4,0 | 11±2,0 |
| 112-200 µm | 19±18 | 19±15 | 19±12 | 19±9,0 | 19±6,0 |
| 201-315 µm | 32±31 | 32±25 | 32±19 | 32±13 | 32±7 |
| 316-500 µm | 57±40 | 57±32 | 57±24 | 57±16 | 57±8 |
| 501-800 µm | 58-100 | 65-100 | 72-100 | 77-100 | 84-100 |
| 801-1000 µm | 59-100 | 69-100 | 79-100 | 89-100 | 99-100 |
| >1000 µm | ≤100 | ≤100 | ≤100 | ≤100 | ≤100 |

Bevorzugte Partikelgrößenverteilungen in Kornklassen als Werte P3 [%] (Massenanteil) sind in nachfolgender Tabelle als Ausführungsformen B¹ bis B⁵ zusammengefasst:

| Kornklasse | B¹ | B² | B³ | B⁴ | B⁵ |
|---|---|---|---|---|---|
| <112 µm | 11±10 | 11±8,0 | 11±6,0 | 11±4,0 | 11±2,0 |
| 112-200 µm | 8,0±7,5 | 8,0±6,0 | 8,0±4,5 | 8,0±3,0 | 8,0±1,5 |
| 201-315 µm | 13±10 | 13±8,0 | 13±6,0 | 13±4,0 | 13±2,0 |
| 316-500 µm | 25±20 | 25±16 | 25±12 | 25±8,0 | 25±4,0 |
| 501-800 µm | 40±35 | 40±28 | 40±21 | 40±14 | 40±7,0 |
| 801-1000 µm | 2,7±2,5 | 2,7±2,0 | 2,7±1,5 | 2,7±1,0 | 2,7±0,5 |
| >1000 µm | <5,0 | <4,0 | <3,0 | <2,0 | <1,0 |

### Fasern

Die erfindungsgemäßen Partikel enthalten von Natur aus Fasern, welche die erfindungsgemäßen Partikel insbesondere zur Herstellung von Naturfaserverbundwerkstoffen geeignet machen. Dabei können die Partikel sphärisch, globulär oder ggf. auch faserig vorliegen.

Bevorzugt beträgt die mittlere Faserlänge der Fasern (gewichtsgemittelte Faserlänge) mindestens 50 µm, bevorzugter mindestens 100 µm, noch bevorzugter mindestens 200 µm, am bevorzugtesten mindestens 300 µm, und insbesondere mindestens 400 µm.

Bevorzugt beträgt die mittlere Faserlänge der Fasern (gewichtsgemittelte Faserlänge) höchstens 1000 µm, bevorzugter höchstens 900 µm, noch bevorzugter höchstens 800 µm, am bevorzugtesten höchstens 700 µm, und insbesondere höchstens 600 µm.

Bevorzugt liegt die mittlere Faserlänge der Fasern (gewichtsgemittelte Faserlänge) im Bereich von 50 bis 1000 µm bevorzugter 100 bis 900 µm, noch bevorzugter 200 bis 800 µm, am bevorzugtesten 300 bis 700 µm, und insbesondere 400 bis 600 µm.

Methoden zur Bestimmung der mittleren Faserlänge (gewichtsgemittelte Faserlänge) sind einem Fachmann bekannt. Erfindungsgemäß bevorzugt erfolgt die Bestimmung gemäß DIN ISO 22314.

Grundsätzlich ist es möglich, für die Herstellung der Partikel Rübenschnitzel einzusetzen, welche bei der Verarbeitung mit einem weiteren Nebenprodukt der Zuckergewinnung besprüht wurden. So kann insbesondere Melasse vor der Trocknung über die Zuckerrübenschnitzel gesprüht werden, um zum einen eine bessere Pressung zu Pellets und zum anderen eine alternative Eignung als Futtermittel zu ermöglichen.

Erfindungsgemäß ist es allerdings bevorzugt, wenn die Partikel aus Zuckerrübenschnitzeln hergestellt werden, welche nicht entsprechend vorbehandelt sind, insbesondere nicht mit Melasse besprüht wurden.

### Zusatzpartikel

In einer bevorzugten Ausführungsform besteht der erfindungsgemäße Naturfaserverbundwerkstoff im Wesentlichen aus den Partikeln, welche aus Zuckerrüben gewonnen wurden. In diesem Fall beträgt der Gehalt der Partikel, welche aus Zuckerrüben gewonnen wurden, im Wesentlichen 100 Gew.-% des Naturfaserverbundwerkstoffs, bezogen auf das Gesamtgewicht des Naturfaserverbundwerkstoffs.

In einer anderen bevorzugten Ausführungsform des erfindungsgemäßen schwimmfähigen Formteils umfasst das Formteil Zusatzpartikel, welche aus Pflanzen oder Pflanzenteilen gewonnen wurden, welche sich von Zuckerrüben unterscheiden. Als Zusatzpartikel eignen sich insbesondere solche Partikel, welche aus Holz, Flachs, Hanf, Sisal, Bagasse, Jute, Sonnenblumen und/oder Reis gewonnen wurden.

### funktionelle Additive

In einer anderen bevorzugten Ausführungsform umfasst das erfindungsgemäße schwimmfähige Formteil zusätzlich zu den Partikeln, welche aus Zuckerrüben gewonnen wurden, andere Inhaltsstoffe, beispielsweise funktionelle Additive wie z.B. Haftvermittler.

In einer bevorzugten Ausführungsform des erfindungsgemäßen Formteils enthält der Naturfaserverbundwerkstoff zusätzlich ein weiteres funktionelles Additiv,
- welches ausgewählt ist aus der Gruppe bestehend aus Haftvermittler, Pigmente, Flammenschutzmittel, Weichmacher, Antioxidantien, Mittel gegen Parasitenbefall, Mittel gegen Fäule, Fungizide, Füllstoffe oder Mischungen davon; bevorzugt einen Haftvermittler; und/oder
- wobei der Gewichtsanteil des weiteren funktionellen Additivs im Bereich von 0,1 bis 5,0 Gew.-% liegt, bezogen auf das Gesamtgewicht des Naturfaserverbundwerkstoffs.

### Haftvermittler

Als Haftvermittler werden erfindungsgemäß bevorzugt modifizierte Polyolefine eingesetzt. Bevorzugt wird dazu ein Polyolefin so modifiziert, dass dieses vorher unlösliche Polyolefin in organischen Lösungsmitteln löslich ist. Zur Modifikation können beispielsweise Chlor und Maleinsäureanhydrid eingesetzt werden. Die polyolefinischen Haftvermittler selber reagieren meisten nicht mit den Bestandteilen der erfindungsgemäßen Zusammensetzung (z.B. den Fasern aus den Zuckerrübenschnitzeln), nur über das Maleinsäureanhydrid kann ggf. eine Reaktion erfolgen.

Ein bevorzugter Haftvermittler ist ein Copolymerisat aus Polypropylen und Maleinsäureanhydrid. Derartige Haftvermittler sind einem Fachmann bekannt und kommerziell erhältlich.

Bevorzugt beträgt der Gehalt des Haftvermittlers mindestens 0,1 Gew.-%, bevorzugter mindestens 0,25 Gew.-%, noch bevorzugter mindestens 0,5 Gew.-%, am bevorzugtesten mindestens 0,75 Gew.-%, und insbesondere mindestens 1,0 Gew.-%, jeweils bezogen auf das Gesamtgewicht des Naturfaserverbundwerkstoffs.

Bevorzugt beträgt der Gehalt des Haftvermittlers höchstens 10 Gew.-%, bevorzugter höchstens 9,0 Gew.-%, noch bevorzugter höchstens 8,0 Gew.-%, am bevorzugtesten höchstens 7,0 Gew.-%, und insbesondere höchstens 6,0 Gew.-%, jeweils bezogen auf das Gesamtgewicht des Naturfaserverbundwerkstoffs.

Bevorzugt liegt der Gehalt des ggf. umfassten Haftvermittlers im Bereich von 0,1 bis 5,0 Gew.-%, bevorzugter 0,25 bis 4,5 Gew.-%, noch bevorzugter 0,5 bis 4,0 Gew.-%, am bevorzugtesten 0,75 bis 3,5 Gew.-%, und insbesondere 1,0 bis 3,0 Gew.-%, jeweils bezogen auf das Gesamtgewicht des Naturfaserverbundwerkstoffs.

Zusätzlich oder alternativ zu den Haftvermittlern kann das erfindungsgemäße Formteil bevorzugt auch weitere funktionelle Additive enthalten, beispielsweise Pigmente, Weichmacher, Antioxidantien, Mittel gegen Parasitenbefall, Mittel gegen Fäule, Fungizide, Füllstoffe, sowie deren Mischungen.

### Gehalt der Partikel in Bezug auf Formteil

In bevorzugten Ausführungsformen beträgt der Gehalt der Partikel, welche aus Zuckerrüben gewonnen wurden, mindestens 5 Gew.-%, mindestens 10 Gew.-%, mindestens 15 Gew.-%, mindestens 20 Gew.-%, mindestens 25 Gew.-%, mindestens 30 Gew.-%, mindestens 35 Gew.-%, mindestens 40 Gew.-%, mindestens 45 Gew.-%, mindestens 50 Gew.-%, mindestens 55 Gew.-%, mindestens 60 Gew.-%, mindestens 65 Gew.-%, mindestens 70 Gew.-%, mindestens 75 Gew.-%, mindestens 80 Gew.-%, mindestens 85 Gew.-%, mindestens 90 Gew.-%, oder mindestens 95 Gew.-%, jeweils bezogen auf das Gesamtgewicht des schwimmfähigen Formteils.

In bevorzugten Ausführungsformen beträgt der Gehalt der Partikel, welche aus Zuckerrüben gewonnen wurden, höchstens 95 Gew.-%, höchstens 90 Gew.-%, höchstens 85 Gew.-%, höchstens 80 Gew.-%, höchstens 75 Gew.-%, höchstens 70 Gew.-%, höchstens 65 Gew.-%, höchstens 60 Gew.-%, höchstens 55 Gew.-%, höchstens 50 Gew.-%, höchstens 45 Gew.-%, höchstens 40 Gew.-%, höchstens 35 Gew.-%, höchstens 30 Gew.-%, höchstens 25 Gew.-%, höchstens 20 Gew.-%, höchstens 15 Gew.-%, höchstens 10 Gew.-%, oder höchstens 5 Gew.-%, jeweils bezogen auf das Gesamtgewicht des schwimmfähigen Formteils.

In bevorzugten Ausführungsformen liegt der Gehalt der Partikel, welche aus Zuckerrüben gewonnen wurden, im Bereich von 10±5 Gew.-%; 20±15 Gew.-%, 20±10 Gew.-%, 20±5 Gew.-%; 30±25 Gew.-%, 30±20 Gew.-%, 30±15 Gew.-%, 30±10 Gew.-%, 30±5 Gew.-%; 40±35 Gew.-%, 40±30 Gew.-%, 40±25 Gew.-%, 40±20 Gew.-%, 40±15 Gew.-%, 40±10 Gew.-%, 40±5 Gew.-%; 50±45 Gew.-%, 50±40 Gew.-%, 50±35 Gew.-%, 50±30 Gew.-%, 50±25 Gew.-%, 50±20 Gew.-%, 50±15 Gew.-%, 50±10 Gew.-%, 50±5 Gew.-%; 60±35 Gew.-%, 60±30 Gew.-%, 60±25 Gew.-%, 60±20 Gew.-%, 60±15 Gew.-%, 60±10 Gew.-%, 60±5 Gew.-%; 70±25 Gew.-%, 70±20 Gew.-%, 70±15 Gew.-%, 70±10 Gew.-%, 70±5 Gew.-%; 80±15 Gew.-%, 80±10 Gew.-%, 80±5 Gew.-%; oder 90±5 Gew.-%; jeweils bezogen auf das Gesamtgewicht des schwimmfähigen Formteils.

Weist das erfindungsgemäße schwimmfähige Formteil Partikel und Zusatzpartikel im Sinne der vorstehenden Definition auf, so liegt das relative Gewichtsverhältnis der Partikel zu den Zusatzpartikeln vorzugsweise im Bereich von 10:1 bis 1:10, oder 8:1 bis 1:8, oder 6:1 bis 1:6, oder 4:1 bis 1:4, oder 2:1 bis 1:2, oder 10:1 bis 1:1, oder 8:1 bis 1:1, oder 6:1 bis 1:1, oder 4:1 bis 1:1, oder 2:1 bis 1:1, oder 1:10 bis 1:1, oder 1:8 bis 1:1, oder 1:6 bis 1:1, oder 1:4 bis 1:1, oder 1:2 bis 1:1.

### Gehalt der Partikel in Bezug auf Naturfaserverbundwerkstoffs

In bevorzugten Ausführungsformen beträgt der Gehalt der erfindungsgemäßen Partikel mindestens 5 Gew.-%, mindestens 10 Gew.-%, mindestens 15 Gew.-%, mindestens 20 Gew.-%, mindestens 25 Gew.-%, mindestens 30 Gew.-%, mindestens 35 Gew.-%, mindestens 40 Gew.-%, mindestens 45 Gew.-%, mindestens 50 Gew.-%, mindestens 55 Gew.-%, mindestens 60 Gew.-%, mindestens 65 Gew.-%, mindestens 70 Gew.-%, mindestens 75 Gew.-%, mindestens 80 Gew.-%, mindestens 85 Gew.-%, mindestens 90 Gew.-%, oder mindestens 95 Gew.-%, jeweils bezogen auf das Gesamtgewicht des Naturfaserverbundwerkstoffs.

In bevorzugten Ausführungsformen beträgt der Gehalt der erfindungsgemäßen Partikel höchstens 95 Gew.-%, höchstens 90 Gew.-%, höchstens 85 Gew.-%, höchstens 80 Gew.-%, höchstens 75 Gew.-%, höchstens 70 Gew.-%, höchstens 65 Gew.-%, höchstens 60 Gew.-%, höchstens 55 Gew.-%, höchstens 50 Gew.-%, höchstens 45 Gew.-%, höchstens 40 Gew.-%, höchstens 35 Gew.-%, höchstens 30 Gew.-%, höchstens 25 Gew.-%, höchstens 20 Gew.-%, höchstens 15 Gew.-%, höchstens 10 Gew.-%, oder höchstens 5 Gew.-%, jeweils bezogen auf das Gesamtgewicht des Naturfaserverbundwerkstoffs.

Bevorzugt liegt der Gehalt der erfindungsgemäßen Partikel im Bereich von 0,1 bis 80 Gew.-%, bezogen auf das Gesamtgewicht des Naturfaserverbundwerkstoffs. In bevorzugten Ausführungsformen liegt der Gehalt der erfindungsgemäßen Partikel im Bereich von 10±5 Gew.-%; 20±15 Gew.-%, 20±10 Gew.-%, 20±5 Gew.-%; 30±25 Gew.-%, 30±20 Gew.-%, 30±15 Gew.-%, 30±10 Gew.-%, 30±5 Gew.-%; 40±35 Gew.-%, 40±30 Gew.-%, 40±25 Gew.-%, 40±20 Gew.-%, 40±15 Gew.-%, 40±10 Gew.-%, 40±5 Gew.-%; 50±45 Gew.-%, 50±40 Gew.-%, 50±35 Gew.-%, 50±30 Gew.-%, 50±25 Gew.-%, 50±20 Gew.-%, 50±15 Gew.-%, 50±10 Gew.-%, 50±5 Gew.-%; 60±35 Gew.-%, 60±30 Gew.-%, 60±25 Gew.-%, 60±20 Gew.-%, 60±15 Gew.-%, 60±10 Gew.-%, 60±5 Gew.-%; 70±25 Gew.-%, 70±20 Gew.-%, 70±15 Gew.-%, 70±10 Gew.-%, 70±5 Gew.-%; 80±15 Gew.-%, 80±10 Gew.-%, 80±5 Gew.-%; oder 90±5 Gew.-%; jeweils bezogen auf das Gesamtgewicht des Naturfaserverbundwerkstoffs.

Der Gehalt der erfindungsgemäßen Partikel und ggf. Zusatzpartikel bezogen auf das Gesamtgewicht des Naturfaserverbundwerkstoffs kann je nach Anforderungen für das Endprodukt (Formteil) und je nach der gewünschten Herstellungsmethode erheblich variieren.

Ein vergleichsweise geringer Gehalt liegt bei ca. 30 Gew.-% und eignet sich beispielsweise für Spritzgussanwendungen.

Ein vergleichsweise hoher Gehalt liegt bei ca. 70 Gew.-% und eignet sich beispielweise für Extrusionsanwendungen.

### Verwendung Partikel

Ein weiterer Aspekt der Erfindung betrifft die Verwendung der vorstehend beschriebenen, erfindungsgemäßen Partikel und ggf. Zusatzpartikeln zur Herstellung von Naturfaserverbundwerkstoffen.

Dazu können die erfindungsgemäßen Partikel bevorzugt in geeigneten Gebinden bereitgestellt werden, um anschließend, ggf. nach Zusatz geeigneter Zuschlagstoffe, wie Polymeren und Haftvermittlern, zu Naturfaserverbundwerkstoffen verarbeitet zu werden.

### Verfahren Herstellung Partikel

Ein weiterer Aspekt der Erfindung betrifft ein Verfahren zur Herstellung der erfindungsgemäßen, aus Zuckerrüben gewonnenen Partikel umfassend folgende Schritte:
(a) Herstellen von Zuckerrübenschnitzeln durch Zerkleinern von Zuckerrüben;
(b) Extrahieren von Saccharose aus den Zuckerrübenschnitzeln;
(c) ggf. Verpressen der Zuckerrübenschnitzel;
(d) ggf. Trocknen der Zuckerrübenschnitzel; und
(e) Mahlen der Zuckerrübenschnitzel.

Schritte (c) und (d) des erfindungsgemäßen Verfahrens sind optional, so dass das erfindungsgemäße Verfahren mindestens die Schritte (a), (b) und (e) umfasst, vorzugsweise in alphabetischer Reihenfolge.

Die Abfolge der einzelnen Verfahrensschritte, insbesondere auch die Abfolge der optionalen Verfahrensschritte (c) und/oder (d), muss nicht streng nacheinander und auch nicht in alphabetischer Reihenfolge erfolgen. So ist es möglich, dass ein erfindungsgemäßer Schritt begonnen wird, ehe der vorangegangene Schritt vollständig abgeschlossen ist, so dass die beiden Schritte wenigstens teilweise gleichzeitig durchgeführt werden.

Erfindungsgemäß bevorzugt beginnt das erfindungsgemäße Verfahren mit Schritt (a), gefolgt von Schritt (b), und endet mit Schritt (e).

Bevorzugte zeitliche Abfolgen der Schritte des erfindungsgemäßen Verfahrens sind (a)-(b)-(e), (a)-(b)-(c)-(e), (a)-(b)-(d)-(e), (a)-(b)-(c)-(d)-(e), oder (a)-(b)-(d)-(c)-(e).

Die Zerkleinerung der Zuckerrüben zu Zuckerrübenschnitzeln in Schritt (a) erfolgt bevorzugt mit herkömmlichen Methoden, wie sie bei der industriellen Gewinnung von Saccharose eingesetzt werden. Geeignete Methoden und Gerätschaften sind einem Fachmann bekannt.

Durch Extraktion wird die in der Zellstruktur enthaltene wässrige Zuckerlösung gewonnen und den Rübenschnitzel entzogen. Die Extraktion von Saccharose aus den Zuckerrübenschnitzeln in Schritt (b) erfolgt bevorzugt ebenfalls mit herkömmlichen Methoden, wie sie bei der industriellen Gewinnung von Saccharose eingesetzt werden. Geeignete Methoden und Gerätschaften sind einem Fachmann ebenfalls bekannt.

Die Herstellung der erfindungsgemäßen Partikel erfolgt bevorzugt mit demjenigen Pektingehalt, wie er nach Schritt (b) in den Zuckerrübenschnitzeln zurückbleibt. Dieser Pektingehalt kann sich grundsätzlich von dem ursprünglichen Pektingehalt der Zuckerrüben unterscheiden, da bei der Extraktion in Schritt (b) üblicherweise auch immer gewisse Mengen an Pektin zusammen mit der Saccharose extrahiert werden.

Anschließend können die Zuckerrübenschnitzel durch mechanische Pressung und Trocknung zu Trockenschnitzeln weiterverarbeitet und anschließend ggf. pelletiert werden.

Im optionalen Schritt (c) des erfindungsgemäßen Verfahrens werden die Zuckerrübenschnitzel bevorzugt bei erhöhtem Druck verpresst. Dabei ist es möglich, dass gleichzeitig der Wassergehalt der Zuckerrübenschnitzel reduziert wird, da Wasser bzw. eine wässrige Lösung beim Verpressen entweichen kann. Geeignete Methoden und Gerätschaften zum Verpressen von Zuckerrübenschnitzeln sind einem Fachmann bekannt.

Im optionalen Schritt (d) des erfindungsgemäßen Verfahrens werden die Zuckerrübenschnitzel bevorzugt getrocknet. Die Trocknung kann bei erhöhter Temperatur und/oder verringertem Druck erfolgen. Geeignete Methoden und Gerätschaften zum Trocknen von Zuckerrübenschnitzeln sind einem Fachmann bekannt.

Die Zuckerrübenschnitzel können für die verschiedenen Anforderungsprofile an die Restfeuchte unterschiedliche Feuchtegrade aufweisen, welche ggf. durch Trocknen unter geeigneten Bedingungen eingestellt werden können.

Abhängig von der weiteren Verarbeitung können grundsätzlich Nassschnitzel, Pressschnitzel, getrocknete Pressschnitzel und Pellets unterschieden werden.

In Schritt (e) des erfindungsgemäßen Verfahrens werden die Zuckerrübenschnitzel bevorzugt in einen Zustand überführt, welcher sie erst zum eigentlichen Einsatz in Naturfaserverbundwerkstoffen und daraus geformten Formteilen geeignet macht.

Bevorzugt werden die Zuckerrübenschnitzel so gemahlen, dass ihre mittlere Korngröße im Bereich von 100 bis 600 µm liegt, bevorzugt im Bereich von 100 bis 400 µm oder 400 bis 600 µm. Kleinere und ggf. auch größere Korngrößen können dabei ggf. abgetrennt werden, z.B. durch Siebung. Damit das erfindungsgemäße Verfahren allerdings wirtschaftlich in industriellem Maßstab durchgeführt werden kann, ist es bevorzugt, die Bedingungen des Mahlens in Schritt (e) bereits so zu wählen, dass Korngrößen außerhalb des Bereichs von 100 bis 600 µm, bevorzugt 100 bis 400 µm oder 400 bis 600 µm, in nur geringem Umfang entstehen, sofern überhaupt.

Erfindungsgemäß bevorzugt erfolgt die Vermahlung der Zuckerrübenschnitzeln mit Hilfe einer Mühle ausgewählt aus der Gruppe bestehend aus Asima-Mühlen, Hammermühlen, Kugelmühlen, Mörsermühlen, Planetenmühlen, Prallmühlen, Rohrmühlen, Rotormühlen, Scheibenmühlen, Schneidmühlen, Strahlmühlen, Trommelmühlen, Vertikalmühlen, Walzenmühlen, Wälzmühlen, und Wirbelstrommühlen.

### Verfahren Herstellung Naturfaserverbundwerkstoff

Ein weiterer Aspekt der Erfindung betrifft ein Verfahren zur Herstellung des erfindungsgemäßen, vorstehend beschriebenen Naturfaserverbundwerkstoffs umfassend die Schritte
(A) Bereitstellen einer erfindungsgemäßen, vorstehend beschriebenen Zusammensetzung;
(B) Bereitstellen eines Polymers oder einer Polymermischung (Polymermatrix);
(C) ggf. Bereitstellen eines Haftvermittlers; und
(D) Mischen der Zusammensetzung, des Polymers bzw. der Polymermischung und ggf. des Haftvermittlers bei einer erhöhten Temperatur oberhalb des Erweichungspunkts, vorzugsweise oberhalb des Schmelzpunkts des Polymers bzw. der Polymermischung (Compoundierung).

Bevorzugt wird dabei die Zusammensetzung der erhöhten Temperatur für höchstens 1 Minute ausgesetzt, bevorzugter höchstens 30 Sekunden, noch bevorzugter höchstens 20 Sekunden, am bevorzugtesten höchstens 10 Sekunden, und insbesondere höchstens 5 Sekunden.

In einer bevorzugten Ausführungsform erfolgt das Compoundieren mit Hilfe eines Extruders. Der Extruder kann ein- oder mehrstufig sein. Der Extruder kann ein Schneckenexruder, Kolbenextruder oder Planetwalzenextruder sein, wobei sowohl Einschneckenextruder als auch Zweischneckenextruder eingesetzt werden können.

In einer bevorzugten Ausführungsform erfolgt das Compoundieren mit Hilfe eines Extrudersystems zur Compoundierung, welches einen Hauptextruder und einen Nebenextruder umfasst. Der Hauptextruder wird zunächst nur mit der erfindungsgemäßen Zusammensetzung beschickt, beispielsweise über einen Trichter. Auf einem Teilabschnitt der des Hauptextruders wird dabei die Zusammensetzung bei einer erhöhten Temperatur T₁ getrocknet, z.B. bei 120 °C. Dabei werden vorzugsweise mehrere atmosphärische Entgasungseinrichtungen genutzt. Gleichzeitig wird im Nebenextruder die Polymatrix gesondert hergestellt. Die Polymere und ggf. weitere Zuschlagstoffe (z.B. Haftvermittler) werden hier (vorzugsweise in Granulatform) zusammengeführt, gleichmäßig vermischt und auf eine erhöhte Temperatur T₂ erhitzt, z.B. auf 220 °C, d.h. vorzugsweise auf eine deutlich höhere Temperatur als im Hauptextruder.

Vorzugsweise beträgt die Temperatur T₁ mindestens 60 °C, mindestens 70 °C, mindestens 80 °C, mindestens 90 °C oder mindestens 100 °C.

Vorzugsweise beträgt die Temperatur T₂ mindestens 100 °C, mindestens 110 °C, mindestens 120 °C, mindestens 130 °C, mindestens 140 °C, mindestens 150 °C, mindestens 160 °C, mindestens 170 °C, mindestens 180 °C, mindestens 190 °C, oder mindestens 200 °C.

Vorzugsweise beträgt die Temperaturdifferenz T₂-T₁ mindestens 10 °C, mindestens 20 °C, mindestens 30 °C, mindestens 40 °C, mindestens 50 °C, mindestens 60 °C, mindestens 70 °C, mindestens 80 °C, mindestens 90 °C, oder mindestens 100 °C.

Die fertige Polymermatrix wird anschließend dem Hauptextruder und der darin getrockneten, erfindungsgemäßen Partikeln welche Naturfasern enthalten, zugeführt. Die Zusammenführung der Naturfasern mit der vorzugsweise deutlich heißeren Polymermatrix erfolgt bevorzugt erst im letzten Teilabschnitt des Hauptextruders. Dort wird die Polymermatrix sofort heruntergekühlt, um eine Degradation der Naturfaser zu vermeiden. In diesem Verarbeitungsschritt des Extruders erfolgt bevorzugt ein weiterer Entgasungsschritt mittels einer Vakuumentgasung. Die Verweilzeit hierbei beträgt bevorzugt lediglich nur wenige Sekunden, z.B. 1 bis 2 Sekunden.

In einer anderen bevorzugten Ausführungsform erfolgt die Extrusion in einem Extruder, der mit den erfindungsgemäßen Partikeln sowie der Polymermatrix und ggf. weiteren Zuschlagstoffen beschickt wird. Der Extruder verfügt vorzugsweise über eine oder mehrere Entgasungseinrichtungen, bevorzugt in Form von Vakuumentgasung. Eine optimale Verdichtung und Verteilung der Fasern mit der Matrix kann über die Schneckenformation verbessert werden.

Der Naturfaserverbundwerkstoff liegt, sofern er ein Halbfertigprodukt ist und nicht bereits zum endgültigen Formteil geformt wurde, bevorzugt in partikulärer Form vor, vorzugsweise als Pulver, Granulat oder Pellets. Bevorzugt ist beispielsweise ein Granulat mit einer Fraktionsgröße von ca. 2 x 1 cm, welches mittels Extrusion und Heißabschlag erhältlich ist.

### Verfahren Herstellung Formteil

Ein weiterer Aspekt der Erfindung betrifft ein Verfahren zur Herstellung des erfindungsgemäßen, schwimmfähigen Formteils umfassend das Thermoformen der erfindungsgemäßen, vorstehend beschriebenen Partikel oder des erfindungsgemäßen, vorstehend beschriebenen Naturfaserverbundwerkstoffs.

Geeignete Methoden und Gerätschaften zum Thermoformen sind einem Fachmann bekannt und umfassen Schmelzextrusion, Spritzguss, Pultrusion (Strangziehen), Pressen, etc.

### Verwendung Formteil

Ein weiterer Aspekt der Erfindung betrifft die Verwendung eines schwimmfähigen Formteils zur Verringerung der Verdunstung von Flüssigkeit aus einem Flüssigkeitsreservoir.

### Bezugszeichenliste

- (1): Formteil
- (2): horizontale Schwimmebene
- (3)(3'): benachbarte Ecken
- (4): Stirnseiten
- (5): Integrierte Auftriebskugel
- (6): Zentrum des Formteils
- (7): Vertikale Ebene
- (8): Rippen
- (9): erste komplexe Stirnfläche
- (10): erste geneigte Stirnfläche
- (11): zweite gegensätzlich komplexe Stirnfläche
- (12): zweite gegensätzlich geneigte Stirnfläche

## Patentansprüche

1. Ein schwimmfähiges Formteil (1) zur Verringerung der Verdunstung einer Flüssigkeit aus einem Flüssigkeitsreservoir;
wobei das Formteil (1) einen Naturfaserverbundwerkstoff enthält, welcher aus Zuckerrüben gewonnene Partikel umfasst, die in einer Polymermatrix eingebettet sind;
wobei das Formteil (1) in einer horizontalen Schwimmebene (2) mehreckig ist und jeweils zwischen zwei benachbarten Ecken (3,3') entlang der Schwimmebene (2) eine Stirnseite (4) aufweist; und
wobei die Stirnseiten (4) derart beschaffen sind, dass mehrere Formteile (1) derart benachbart angeordnet werden können, dass sich gegenüberliegende Stirnseiten (4) benachbarter Formteile (1) berühren und die mehreren Formteile (1) einen im Wesentlichen geschlossenen Flächenverbund ausbilden.

2. Das schwimmfähige Formteil (1) gemäß Anspruch 1,
- wobei der Gehalt an Saccharose in den Partikeln höchstens 25 Gew.-% beträgt, bezogen auf das Trockengewicht der Partikel; und/oder
- wobei mindestens 30 Gew.-% der Partikel, bezogen auf das Gesamtgewicht der Partikel, eine Korngröße im Bereich von 112 bis 800 µm aufweisen; und/oder
- die Partikel Fasern enthalten.

3. Das schwimmfähige Formteil (1) nach Anspruch 2, wobei die mittlere Faserlänge der Fasern im Bereich von 50 bis 1000 µm liegt.

4. Das schwimmfähige Formteil (1) nach einem der Ansprüche 1 bis 3, wobei die Partikel Pektin enthalten und der Gehalt an Pektin
- höchstens 14 Gew.-% beträgt, oder
- im Bereich von 14 bis 34 Gew.-% liegt,
jeweils bezogen auf das Trockengewicht der Partikel.

5. Das schwimmfähige Formteil (1) nach einem der Ansprüche 1 bis 4, wobei das Formteil zusätzliche Partikel umfasst, welche aus Pflanzen oder Pflanzenteilen gewonnen wurden, welche sich von Zuckerrüben unterscheiden.

6. Das schwimmfähige Formteil (1) nach einem der Ansprüche 1 bis 5, wobei die aus Zuckerrüben gewonnenen Partikel durch ein Verfahren umfassend folgende Schritte hergestellt wurden:
a) Herstellen von Zuckerrübenschnitzeln durch Zerkleinern von Zuckerrüben;
b) Extrahieren von Saccharose aus den Zuckerrübenschnitzeln;
c) ggf. Verpressen der Zuckerrübenschnitzel;
d) ggf. Trocknen der Zuckerrübenschnitzel; und
e) Mahlen der Zuckerrübenschnitzel.

7. Das schwimmfähige Formteil (1) nach einem der Ansprüche 1 bis 6, wobei
- der Gehalt der Polymermatrix im Bereich von 20 bis 99,9 Gew.-% liegt, bezogen auf das Gesamtgewicht des Naturfaserverbundwerkstoffs; und/oder
- die Polymermatrix ein thermoplastisches Polymer umfasst, welches bevorzugt ausgewählt ist aus der Gruppe umfassend Polyolefine, Polyethylen, Polypropylen, Polystyrol, Polyvinylchlorid, Polyamide, Polyester, Polyethylenterephthalat, Polylactat, Polylactid, Polycarbonat, Polyacrylate, Polyacrylnitril, Polymethylmethacrylat, Polyvinylacetat, Acrylnitril-Butadien-Styrol, Polyetheretherketon, deren Mischungen oder Copolymerisaten; und/oder
- die Polymermatrix ein duroplastisches Polymer umfasst, welches bevorzugt ausgewählt ist aus der Gruppe umfassend Phenolharze, Aminoplaste, Epoxidharze, Polyesterharze, ABS-Harze, deren Mischungen oder Copolymerisaten.

8. Das schwimmfähige Formteil (1) nach einem der Ansprüche 1 bis 7, wobei der Naturfaserverbundwerkstoff zusätzlich ein weiteres funktionelles Additiv enthält,
- welches ausgewählt ist aus der Gruppe bestehend aus Haftvermittler, Pigmente, Flammenschutzmittel, Weichmacher, Antioxidantien, Mittel gegen Parasitenbefall, Mittel gegen Fäule, Fungizide, Füllstoffe oder Mischungen davon; bevorzugt einen Haftvermittler; und/oder
- wobei der Gewichtsanteil des weiteren funktionellen Additivs im Bereich von 0,1 bis 5,0 Gew.-% liegt, bezogen auf das Gesamtgewicht des Naturfaserverbundwerkstoffs.

9. Das schwimmfähige Formteil (1) nach einem der Ansprüche 1 bis 8,
- wobei die horizontale Schwimmebene (2) dreieckig, viereckig, sechseckig, oder achteckig ist; bevorzugt dreieckig, viereckig oder sechseckig ist; und besonders bevorzugt sechseckig ist; und
- wobei die Stirnseiten (4) im Wesentlichen die gleiche Länge und/oder Breite aufweisen; und/oder
- wobei der Flächenverbund aus den mehreren Formteilen (1) mindestens 90% der durch die geschlossene Hüllkurve aller Elemente definierten Flüssigkeitsoberfläche bedeckt.

10. Das schwimmfähige Formteil (1) nach einem der Ansprüche 1 bis 9, welches zusätzlich eine integrierte Auftriebskugel (5) umfasst, wobei bevorzugt die integrierte Auftriebskugel (5) ihr Zentrum in dem Massenzentrum des Formteils hat, und wobei bevorzugt die integrierte Auftriebskugel (5) vollständig oder teilweise hohl ist, und besonders bevorzugt mit Luft gefüllt ist.

11. Das schwimmfähige Formteil (1) nach einem der Ansprüche 1 bis 10, welches ein in der horizontalen Schwimmebene (2) liegendes Zentrum (6) aufweist, wobei eine Ausdehnung des Formteils (1) in einer vertikalen Ebene (7) von der Stirnseite des Formteils zum Zentrum (6) des Formteils zunimmt und bevorzugt die Zunahme der Ausdehnung des Formteils (1) in der vertikalen Ebene durch Rippen (8) hervorgerufen wird.

12. Das schwimmfähige Formteil (1) nach einem der Ansprüche 1 bis 11, wobei
- die Stirnseiten (4) dazu hergerichtet sind, das schwimmfähige Formteil (1) mit einer Stirnseite (4') eines weiteren schwimmfähigen Formteils (1') zu verbinden; wobei jede Stirnseite (4,4') jeweils eine erste Stirnfläche und eine zweite Stirnfläche umfasst, wobei die erste Stirnfläche der Stirnseite (4) des schwimmfähigen Formteils (1) dazu hergerichtet ist, mit einer korrespondierend überlappenden zweiten Stirnfläche der Stirnseite (4') eines benachbarten schwimmfähigen Formteils (1') verbunden zu werden; und wobei die zweite Stirnfläche der Stirnseite (4) des schwimmfähigen Formteils (1) dazu hergerichtet ist, mit einer korrespondierend überlappenden ersten Stirnfläche der Stirnseite (4') eines benachbarten schwimmfähigen Formteils (1') verbunden zu werden; und/oder
- die Stirnseiten (4) magnetisch und dazu hergerichtet sind, das schwimmfähige Formteil (1) mit einer Stirnseite (4') eines weiteren schwimmfähigen Formteils (1') zu verbinden; wobei jede Stirnseite (4,4') jeweils eine magnetische erste Stirnfläche und eine gegenpolig magnetische zweite Stirnfläche umfasst, wobei die magnetische erste Stirnfläche der Stirnseite (4) des schwimmfähigen Formteils (1) dazu hergerichtet ist, mit einer gegenpolig magnetischen zweiten Stirnfläche der Stirnseite (4') eines benachbarten schwimmfähigen Formteils (1') verbunden zu werden; und wobei die magnetische zweite Stirnfläche der Stirnseite (4) des schwimmfähigen Formteils (1) dazu hergerichtet ist, mit einer gegenpolig magnetischen ersten Stirnfläche der Stirnseite (4') eines benachbarten schwimmfähigen Formteils (1') verbunden zu werden.

13. Das schwimmfähige Formteil (1) nach einem der Ansprüche 1 bis 12, welches zusätzlich
- Messinstrumente; bevorzugt Messinstrumente zur Bestimmung von Temperatur, Feuchtigkeit, Windgeschwindigkeit, Lichtintensität, Leitfähigkeit und/oder pH-Wert; und/oder
- Funksender-/Empfänger-Systeme; und/oder
- Funk- und/oder Sattelitengestützte Ortungsgeräte; und/oder
- elektronische Kennzeichnungseinrichtungen; bevorzugt RFID-Markierungen,
enthält.

14. Das schwimmfähige Formteil (1) nach einem der Ansprüche 1 bis 13, welches zumindest teilweise eine Beschichtung aufweist, welche
- korrosionsbeständig ist; und/oder
- beständig gegen organische Lösemittel ist; und/oder
- resistent gegen Parasitenbefall ist; und/oder
- resistent gegen Algenbefall ist; und/oder
- resistent gegen Fäule ist.

15. Verwendung eines schwimmfähigen Formteils (1) nach einem der Ansprüche 1 bis 14 zur Verringerung der Verdunstung von Flüssigkeit aus einem Flüssigkeitsreservoir.
